# EUROPEAN PATENT APPLICATION

(11) **EP 0 976 648 A1**
(43) Date of publication of application: **02.02.2000**
(21) Application number: 99202457.0
(22) Date of filing: 26.07.1999
(51) Int. Cl.: B62K 5/04, B62K 13/00, B62M 27/02

(54) **Vehicle**

(30) Priority: 27.07.1998 NL 1009740
(71) Applicant: M & M Wheels V.o.f., 4621 EL Bergen op Zoom (NL)
(72) Inventor: Tebbens, Thomas Leonardus, 4621 EL Bergen op Zoom (NL)
(74) Representative: Griebling, Onno

(57) **Abstract**

A recreational vehicle (1) with particular driving properties is described, which is suitable, or can easily be converted, for use on the road, off-road, on snow, ice, etc. The recreational vehicle according to the present invention has two non-steered wheels (21, 22) at the front, which are designed as "twin wheels", and at least one steered wheel (40) at the rear, which steered wheel is also driven and has freedom of rotation with respect to a vertical axis (41).

## Description

The present invention relates to vehicles, and more particularly to vehicles which are suitable for recreational use, i.e. use for pleasure.

The object of the present invention is to provide a new recreational vehicle.

More particularly, the object of the present invention is to provide a vehicle with unique driving properties, which driving properties will invite a user to use the vehicle for entertainment purposes.

A further object of the present invention is to provide a vehicle which can be used on numerous types of terrain or can easily be made suitable for a different type of terrain, respectively.

According to an important aspect of the present invention, a recreational vehicle has two non-steered wheels at the front and at least one driven and steerable wheel at the rear, which has a freedom of rotation of 360° with respect to a vertical axis.

These and other aspects, characteristics and advantages of the present invention will be clarified in more detail by the following description of a preferred embodiment of a recreational vehicle according to the invention, with reference to the drawing, in which identical reference numerals denote identical or similar components, and in which:
figure 1 diagrammatically shows a plan view of an exemplary embodiment of a recreational vehicle according to the present invention, with a single rear wheel;
figure 2 diagrammatically shows a perspective view of a ski unit to be attached to a wheel;
figure 3 diagrammatically shows a side view of the recreational vehicle from figure 1, with a motor positioned in a subframe;
figure 4A shows a block diagram of speed-control means;
figure 4B diagrammatically shows a light trap;
figure 5 shows a plan view, similar to that of figure 1, of a variant of the recreational vehicle according to the present invention, with two rear wheels;
figure 6 shows a side view, similar to that of figure 3, of a variant of the recreational vehicle according to the present invention, with the motor positioned in the main frame;
and figure 7 shows a plan view, similar to that of figure 1, in order to illustrate a few variations of detail.

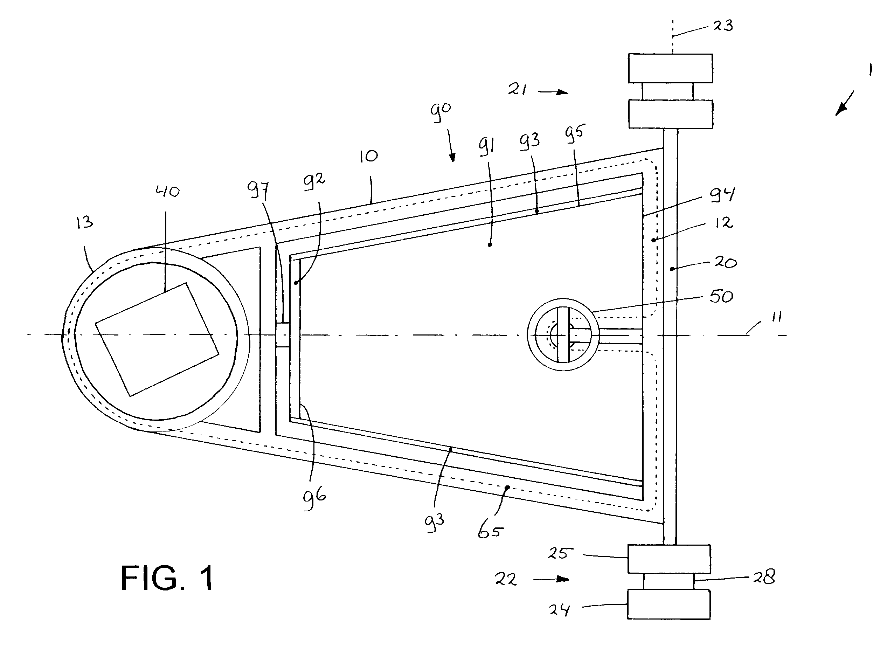

Figure 1 diagrammatically depicts a plan view of an exemplary embodiment of a recreational vehicle 1 according to the present invention. The vehicle 1 has a main frame 10 which, in plan view, is substantially in the form of an isosceles triangle which is symmetrical with respect to the longitudinal axis 11 of the vehicle 1, the base 12 of the triangular main frame 10 being perpendicular to the longitudinal axis 11. The vertex 13 of the triangular main frame 10, opposite the base 12, is truncated or rounded, as shown.

The base 12 of the triangular main frame 10 defines the front side of the vehicle 1, while the vertex 13 of the triangular main frame 10 defines the rear side of the vehicle 1. At the front, the vehicle 1 has two wheels 21 and 22, which are positioned at a relatively great distance from one another, on either side of the main frame 10. The wheels 21 and 22 are fixed wheels, which is intended to mean that they have a freedom of rotation only with respect to a common horizontal axis of rotation 23. The wheels 21 and 22 may be individually mounted on the main frame 10, but preferably the wheels 21 and 22 are mounted on a common front axle 20, which front axle 20 is attached to the base 12 of the main frame 10. In one possible embodiment, the wheels 21 and 22 are fixed with respect to the common front axle 20, the said front axle 20 being mounted so that it can rotate with respect to the main frame 10. Preferably, however, the front axle 20 is mounted in a fixed position on the main frame 10, and the wheels 21 and 22 are mounted so that they can rotate individually with respect to the front axle 20. It is possible for the front axle 20 to form the base 12 of the main frame 10.

Obviously, the recreational vehicle 1 has brakes, but these are not illustrated in the figures for the sake of simplicity. Preferably, the said brakes are designed as drum brakes which are associated with the wheels 21 and 22 and are actuated by means of a brake pedal which is mounted on the main frame 10 in the vicinity of the base 12, which brake pedal is coupled, via any suitable means, to the drum brakes, for example mechanically, by means of a cable, or hydraulically. For the sake of simplicity, neither such coupling means nor a brake pedal of this nature are illustrated in figure 1.

In the embodiment sketched in figure 1, the recreational vehicle 1 is intended and suitable for driving on solid ground, for example cross-country or on the road. In a variant, the recreational vehicle 1 is suitable for moving forwards in snow or on ice, in that skis or skates are mounted instead of wheels 21, 22. According to an important aspect of the present invention, however, it is not necessary to remove the wheels 21, 22 and mount skis and/or skates instead of the wheels. The flexibility of use of the recreational vehicle 1 increases considerably if skis and/or skates can be mounted without it being necessary to remove wheels first. To this end, the present invention provides a structure which allows skis or skates to be mounted and removed rapidly and with a small number of simple operations, specifically by attaching a ski or skate to a wheel 21, 22. In a preferred embodiment, the wheels 21, 22 are to this end designed as "twin wheels", as indicated in figure 1. Herein, each wheel 21, 22 comprises two pneumatic tyres 24 and 25, each mounted on a respective rim (not shown), which rims are attached to a common drum 28 which is rotatably mounted on one end of the front axle 20. It will be clear that the drum 28 and the two said rims may be designed as an integral unit. An important aspect of this preferred embodiment is that the tyres 24, 25 have an axial distance between them, measured in the direction of the length of the front axle 20, which distance may be of the order of approximately 5 cm. The width of the tyres 24, 25, i.e. their dimension measured in the axial direction, may, for example, be approximately 10 cm.

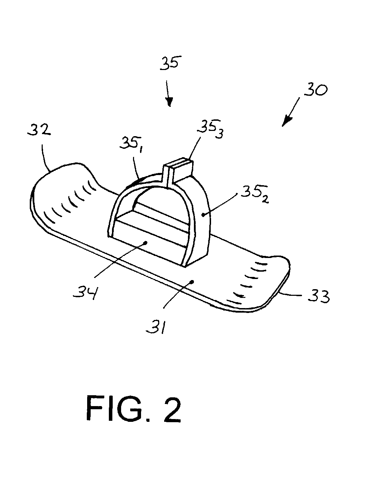

Figure 2 shows a perspective view of a ski unit 30 which can be mounted on a "twin wheel" of this nature. The ski unit 30 comprises an elongate ski board 31, the width of which substantially corresponds to the sum of the widths of the tyres 24, 25 and the axial distance between them, i.e., in the above example, approximately 25 cm. The length of the ski board 31 may suitably be, for example, one metre, but this length is not critical. Since the recreational vehicle 1, as will be discussed in more detail below, can travel both forwards and backwards, the ski board 31 is preferably symmetrical in its longitudinal direction, and more particularly the ski board 31 is provided with upwardly bent end sections 32 and 33 at both its ends. At its middle section, the ski board 31 is provided with a positioning block 34, which may be designed as an elongate, substantially rectangular block, the width of which substantially corresponds to the distance between the wheels 24, 25 and the height of which is less than, and preferably substantially equal to, the difference between the radius of the tyres 24, 25 and the radius of the wheel drum 28. Thus, the two tyres 24, 25 of the wheel 22 can be placed on the ski board 31, on either side of the positioning block 34.

The ski unit 30 is furthermore provided with an attachment member 35 which is intended to mount the ski unit 30 on the wheel drum 28. The said attachment member 35 is preferably a clamping member, and figure 2 shows a possible embodiment thereof which, owing to its simplicity, is preferred. In this embodiment, the attachment member 35 comprises two clamping brackets 35₁ and 35₂ which, at their bottom end, are pivotably connected to the positioning block 34 or to the ski board 31, which are of a width which is less than and preferably substantially equal to the axial distance between the tyres 24 and 25, and which are curved in a contour which corresponds to the cylindrical surface of the wheel drum 28. At their top ends, the clamping brackets 35₁ and 35₂ are provided with means 35₃ for attaching the clamping brackets to one another. These closure means 35₃ may comprise any suitable means, for example a nut and bolt combination (not shown). It is preferable, however, to use a rapid-action coupling of a type which is known per se.

It will be clear that attaching skis is particularly easy using the structure described. Firstly, the clamping brackets 35₁ and 35₂ are uncoupled and pivoted downwards. Then, the ski board 31 is placed on the ground, and the wheel 22 is put or driven onto the ski board 31, in such a manner that the tyres 24 and 25 are situated on either side of the positioning block 34. Then, the clamping brackets 35₁ and 35₂ are pivoted upwards, and the closure means 35₃ are closed, so that the clamping brackets 35₁ and 35₂ clamp securely around the wheel drum 28. To dismantle the ski unit 30, the said operations are carried out in the reverse order.

A ski which has been mounted in such a way rests securely in position, with the advantage that the width of the brackets 35₁ and 35₂, as well as the positioning block 34, corresponds to the axial distance between the tyres 24 and 25, in this way ensuring good lateral support. In this case, it may be advantageous for the brackets 35₁ and 35₂ to have a substantial radial dimension, in the order of the difference between the radius of the tyres 24 and 25 and the radius of the wheel drum 28.

It will be clear that a skate unit can be mounted in a similar way and may be substantially identical to the ski unit 30 discussed, except that a skate blade will be arranged on the underside, on or instead of the board 31.

Furthermore, it will be clear that the ski board 31 may be designed in the form of a snowboard, with the result that it can be used not only in snow but also on any desired soft and/or slippery surface, such as for example slush or mud. The vehicle according to the present invention can then be used to good effect on the beach, both in loose dry sand and along the water's edge.

According to an important aspect of the present invention, the recreational vehicle 1 has a single driven wheel 40, which can rotate about a substantially vertical axis 41, at its rear, i.e. at the vertex 13 of the triangular main frame 10. The freedom of rotation of the wheel 40 about the vertical axis 41 is 360°. More precisely, the wheel 40 can be rotated without limitation about the vertical axis 41, both to the left and to the right. In the vicinity of the front of the recreational vehicle 1, i.e. in the vicinity of the base 12 of the main frame 10, the recreational vehicle 1 has a steering wheel 50, by means of which the rotation of the single rear wheel 40 with respect to the vertical axis 41 can be controlled. This steering wheel 50 can also rotate without limitation, both to the left and to the right.

As a result of the combination of the two fixed front wheels 21 and 22 and the rotatable, driven wheel 40, the vehicle 1 according to the present invention has unique driving characteristics which make it particularly suitable for recreational use, inter alia and in particular for football on wheels. The vehicle 1 may drive forwards, travel in curves, rotate about its own axis, drive backwards, and travel in curves when driving backwards, without there being any need to brake and/or change gear, simply by rotating the steering wheel 50. These driving characteristics apply not only on the road or cross-country, but also on snow and/or ice, in which case the "fixed" ski units 30 or skate units are active instead of the fixed wheels 21 and 22.

Depending on the terrain on which the vehicle 1 is going to be used, the dimensions and the type of the driven wheel 40 may be selected in such a manner that this wheel is always optimized for the terrain in question. However, it is preferable to use a single wheel which can be used in all types of terrain (flat road, uneven terrain, ice, snow), since it is then unnecessary to change the wheel 40. To this end, the wheel 40 is preferably selected to be a type with relatively large dimensions and with a rough profile, such as for instance known for agricultural tractors. If desired, it is also possible to fit a clamping strip or chain around the wheel 40 in order to increase the grip, in a comparable manner to the principle of a snow chain.

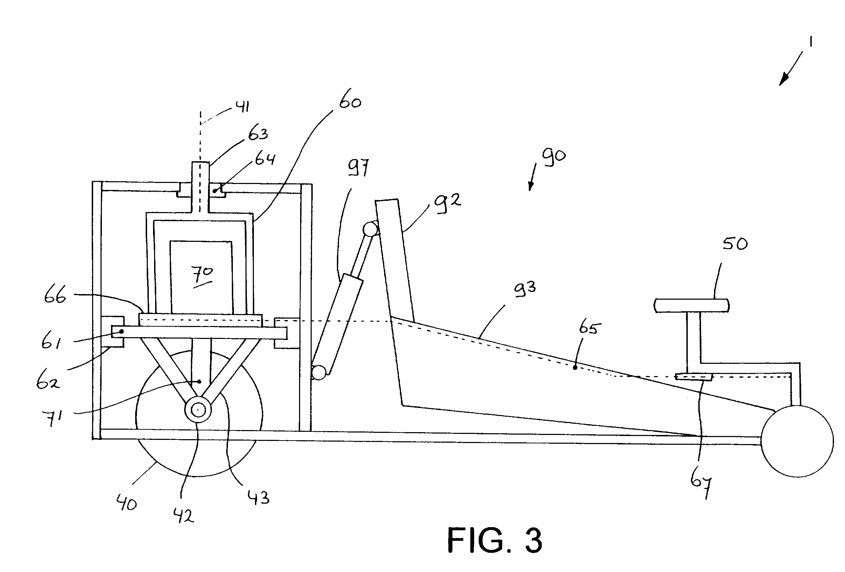

A possible embodiment of a structure which allows the wheel 40 to be driven while still being able to rotate about its vertical axis will now be described with reference to figure 3, which diagrammatically shows a side view of the vehicle 1. A subframe 60, which is also referred to by the term wheel frame, is mounted at the rear of the main frame 10, i.e. at the vertex 13 of the substantially triangular main frame 10. This wheel frame 60 is attached to the main frame 10 in such a manner that this wheel frame 60 can rotate as a whole with respect to the main frame 10 about the said vertical axis 41. The precise configuration of the wheel frame 60 may be any suitable configuration. In the embodiment depicted diagrammatically in figure 3, the wheel frame 60 has a circular base plate 61 which is disposed substantially horizontally and is mounted so that it can rotate in a bearing rim 62 which is mounted fixedly in the main frame 10. The bearing rim may be designed in such a manner that the circular base plate 61 is prevented from tilting about any horizontal axis. To achieve increased stability against tilting of the wheel frame 60 about any horizontal axis, the wheel frame 60, as sketched, may be provided on its top side with a substantially vertical, cylindrical rod 63, the axis of which coincides with the said axis of rotation 41 and which is mounted in a rotary bearing 64 which is fixedly connected to the main frame 10.

The said wheel 40 is situated beneath the baseplate 61. The wheel 40 is bearing-mounted rotatably in a wheel bearing 42, the axis of rotation of the wheel bearing 42 being horizontally oriented, which wheel bearing 42 is attached to the base plate 61 by means of one or more wheel supports 43.

It will be clear to a person skilled in the art that as a result a suspension of the wheel 40 with respect to the main frame 10 is obtained in such a manner that this wheel 40 can rotate about the said axis 41 without limitation, as a result of rotation of the base plate 61 in the bearing rim 62. This rotation of the base plate 61 in the bearing rim 62 is brought about by the driver of the vehicle 1 by means of the steering wheel 50. To this end, the steering wheel 50 is coupled to the base plate 61, in order to transmit rotation of the said steering wheel 50 to the base plate 61. In the embodiment of the vehicle 1 which is illustrated, for this purpose a gear ring 66 is attached to the base plate 61, and the vehicle 1 has an endless, continuous toothed chain 65 which engages, on the one hand, with the gear ring 66 of the wheel frame 60 and, on the other hand, with a gear wheel 67 which is coupled to the steering wheel 50. For this purpose, the chain 65 is guided suitably in the main frame 10, for example in guide tubes and along guide rolls or guide wheels, as will be clear to a person skilled in the art, and not shown in the figures for the sake of simplicity. In figures 1 and 3, the chain 65 is diagrammatically depicted by means of a dashed line.

For driving the wheel 40, any suitable motor 70 is mounted in the wheel frame 60, which motor is only diagrammatically depicted in figure 3. The motor 70 is situated above the base plate 61 and is coupled to the wheel 40 by means of any suitable coupling means 71 which reach through the base plate 61, for example a drive chain or a cardan shaft. The motor 70 may be any suitable motor, for example an electric motor or a petrol engine. To allow it to be used under all use conditions which are to be expected, the motor 70 must be relatively powerful, in order to be able to drive the wheel 40 with a relatively great force; moreover, it is preferable that no space is taken up by relatively large and heavy batteries for driving an electric motor. For these reasons, it is preferable to use a petrol engine. Petrol engines of suitable dimensions and with suitable power are commercially available as standard.

To allow the motor 70 to idle when the vehicle is at a standstill, it is preferable for a centrifugal clutch or the like to be incorporated in the coupling between the motor 70 and the wheel 40, as will be clear to a person skilled in the art.

In order to control the rotational speed of the motor 70, and therefore the rotational speed of the wheel 40, the vehicle 1 is provided with speed-control means 80, which can be operated by the driver of the vehicle 1. The speed-control means 80 may comprise a pedal 81 which is mounted on the main frame 10 in the vicinity of its base 12 and which can be operated by the driver using one of his feet. In a similar way to that which is known for a motor car, the extent to which the driver depresses the pedal 81 is representative of the desired speed. The motor 70 is provided with a speed-control member 73, which determines the rotational speed of the motor and which may, for example, be a fuel-control valve. The pedal 81 is coupled to the said fuel-control valve 73 in such a manner that the rotation of the motor 70, together with the wheel frame 60, about the said vertical axis 41 with respect to the main frame 10 is not impeded. In an embodiment which is preferred in view of its simple design, the speed-control means 80 comprise a wireless communication path 82 between the pedal 81 and the fuel-supply control valve 73.

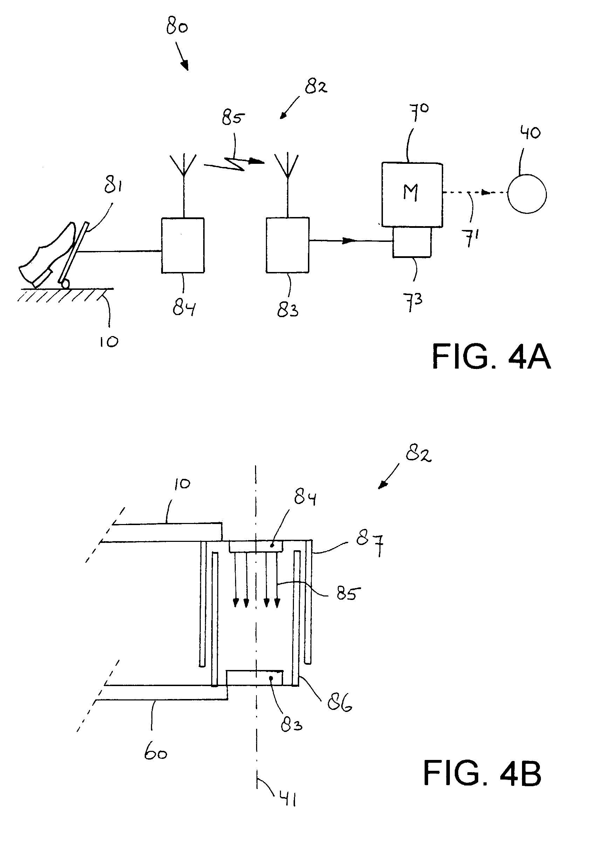

As diagrammatically illustrated in figure 4A, the speed-control means 80 therefore preferably comprise a transmitter 84 and a receiver 83. The transmitter 84 is coupled to the pedal 81 and generates a signal which is representative of the position of the pedal 81. The receiver 83 receives the signal 85 generated by the transmitter 84 and operates the fuel-control valve 73 in response to this signal.

The transmitter 84 and receiver 83 may be designed for a radio signal 85. In this case, the physical location of the transmitter 84 may be situated in the vicinity of the pedal 81. The power of the transmitter 84 does not have to be particularly great, since the distance between transmitter 84 and receiver 83 is constant, being of the order of approximately 2 metres. For the signal 85, it is possible to make use of AM or FM, and the signal may also be suitably coded in order to prevent interference resulting from other transmitters or interference with other transmitters. More particularly, it is possible to make use of technology which is known per se for the remote control of model aircraft, for example.

In an alternative embodiment, the wireless communication path 82 is an optical communication path, in which case the signal 85 is a light signal, for example infrared. An advantage of a system of this nature is that it can easily be designed in such a way that it is not possible for any interfering signals to escape outwards, and that the system is also not sensitive to any external interference signals. Figure 4B illustrates that for this purpose the transmitter and receiver may be designed as a light trap. The light trap comprises two cylinders 86, 87 which are disposed one inside the other and are able to rotate about their axis with respect to one another, the first cylinder 86 being connected to the wheel frame 60, and the second cylinder 87 being connected to the main frame 10, and the two cylinders 86, 87 being disposed in such a manner that their axes coincide with the said axis of rotation 41. An optical transmitter 84, for example an infrared LED, is arranged in the vicinity of the bottom of the second cylinder 87. A receiver 83, for example a light-sensitive component such as a light-sensitive transistor or the like, is arranged in the vicinity of the bottom of the first cylinder 86. It will be clear that, with an arrangement of this nature, the signal 85 transmitted by the transmitter 84 is certain to reach the receiver 83 in a reliable manner, irrespective of the rotational position of the receiver 83 with respect to the transmitter 84.

The embodiment of the vehicle 1 which is illustrated in the figures provides space for one person, but it will be clear from the following text that the vehicle 1 may also be made suitable for two or more people, by suitably increasing its size. For the vehicle 1 illustrated in the figures, the seating position for the driver is defined by a recessed seat 90, having a bottom 91, a rear wall 92 which stands upwards from the bottom, and two side walls 93 which stand upwards from the bottom. As can be seen from the plan view shown in figure 1, the bottom 91 is generally in the form of a trapezium, substantially corresponding to a section of the triangular shape of the main frame 10. More particularly, the bottom 91 has a front 94 which is attached to the base 12 of the main frame 10, sides 95 which are substantially parallel to the limbs of the triangular main frame 10, and a rear 96. The side walls 93 are substantially vertically oriented, starting from the sides 95 of the trapezoidal bottom 91. The bottom 91 may be substantially horizontal but, as illustrated in the side view shown in figure 3, the bottom 91 may incline slightly in the longitudinal direction of the vehicle 1, in which case the front 94 of the bottom may be situated at a lower level than the rear 96 of the bottom.

Starting from the rear 96 of the bottom 91, the back wall 92 of the recessed seat 90 is oriented substantially vertically but may also, as indicated in the side view shown in figure 3, slope backwards slightly.

As has been stated, the recessed seat 90 provides space for a driver, who is able to sit in the recessed seat 90 with his back against the backrest 92 of the recessed seat 90 and with his legs on either side of the steering wheel 50, in which case his feet will be situated in the vicinity of the front 94 of the bottom 91. To provide a secure seating position, it is recommended for the legs of the driver to rest against the side walls 93 of the recessed seat 90, and for this reason the actuators for braking and accelerating are preferably situated at the ends of the base 12.

The recessed seat 90 may be fixed in the main frame 10. Preferably, however, the recessed seat 90 is provided with a suspension system in order to increase the comfort of the driver of the vehicle 1. For this purpose, in the embodiment illustrated, the front side 94 of the bottom 91 is pivotably attached to the base 12 of the main frame 10, and the recessed seat 90, at its rear side, for example via its rear wall 92, is connected to the main frame 10 via a spring or shock absorber 97. As an alternative, it will be possible to provide the wheels with suspension means, but the above-described design in which the recessed seat 90 is spring-suspended in the main frame 10 offers the advantage that the main frame 10 and the fixed front wheels form a rigid frame, which is to the benefit of the stability of the vehicle.

The recreational vehicle described above is particularly robust, has special driving characteristics and can easily be adapted to various types of terrain, making it particularly versatile in use. An advantage here is that the two front wheels are non-steered, so that other components, such as skis or skates, can be attached thereto. A further advantage is that the drive and steering are combined in a single wheel which is suitable or can be made suitable for a number of types of terrain.

The present invention also provides for the possibility of using the recreational vehicle in water. In this case, of course, it will firstly have to be "watertight" and "floating", as will be clear to a person skilled in the art. However, it is important, in the context of the present invention, that the drive and steering be integrated in a single component. It will be possible to drive and steer the recreational vehicle, or to use a more appropriate term in water, the vessel, using the said wheel 40 if it is made suitable for displacing water. For this purpose, a paddle wheel or the like may for example be mounted on the wheel. However, it is also possible to mount a separate propulsion unit, for example a water-jet pump or impeller pump, which is driven directly by the said motor 70, next to the wheel 40 on the subframe 60. For this purpose, the present invention provides for a pump unit having a housing, a paddle wheel which is mounted at a relatively low level in the housing, and an input shaft which is mounted at a relatively high level in the housing and drives the paddle wheel, for example by means of a belt coupling. The housing is provided with attachment means, preferably a click-together system, for attaching the housing to the subframe 60, in such a manner that the said input shaft comes into engagement with a shaft which is driven by the motor 70.

A further important advantage of the recreational vehicle according to the present invention is that it is relatively easy to transport behind a towing vehicle, for example by attaching a loading platform behind the said towing vehicle and driving and fixing the recreational vehicle onto the said loading platform by means of its rear wheel 40. It is also possible for the rear end of the main frame 10 to be provided with a cap-like ball-receiving member which can be placed over a standard ball of a standard towing hook, so that the vehicle can be quickly and directly coupled to a towing vehicle.

It will be obvious to a person skilled in the art that the scope of the present invention is not limited to the examples which have been discussed above, but rather that numerous variations and modifications to these examples are possible without departing from the scope of the invention as defined in the appended claims. For example, it is possible for the wheels 21, 22 to be absent and for ski units to be attached permanently instead of these wheels if the intention is for the vehicle to be used only in the snow, and there is no need for the option of also using the vehicle on the road.

In the example described, a steering movement of the steering wheel 50 is transmitted to the steerable rear wheel 40 by means of a chain 65. As an alternative to a chain, it would also be possible to use a belt, optionally a toothed belt. As an alternative to a wrap-around drive of this nature, use could also be made of a rack transmission, a worm/rack-and-worm transmission, hydraulic pumps, and the like.

In the example described, the subframe 60 of the steerable rear wheel 40 is bearing-mounted both at its top (64) and at a bottom section (62). However, it is not necessary for the subframe 60 to be mounted at two spatially separate locations: it may, for example, be sufficient if only the bearing rim 62 is present.

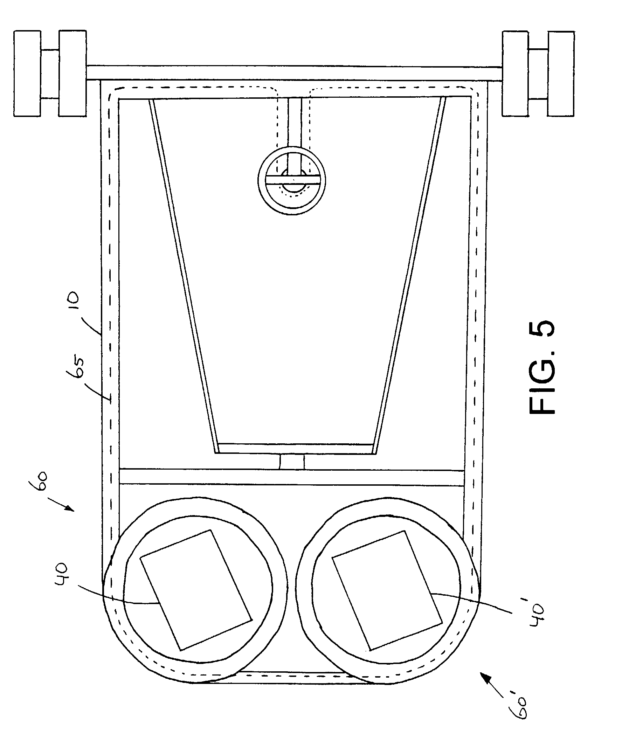

In the example described, there is only a single rear wheel 40, and the vehicle may be described as a three-wheeler. However, it is also possible for the vehicle to have a plurality of rear wheels which all have complete freedom of rotation about a vertical axis and are rotated synchronously by the steering wheel 50. In this case, it is not necessary for all the said rear wheels to be driven by a motor, although it is entirely possible for this to be the case. Figure 5 shows a plan view, similar to that of figure 1, of a variant of the vehicle, in which two such rear wheels 40 and 40' are arranged next to one another, each mounted in an associated subframe 60 and 60' which, in the manner discussed with reference to figure 3, may be mounted in the main frame 10 in such a manner that it can rotate, which two subframes 60 and 60' may be identical to one another and are coupled to the same chain 65.

An advantage of the version with double rear wheels illustrated in figure 5 is improved stability. If both wheels are driven, and certainly if they are driven individually by separate motors, improved grip on the ground is also obtained.

However, it is also possible for the vehicle to be provided with a plurality of rear wheels, for example three, which may be placed in a line next to one another or, for example, in a triangular configuration.

In the embodiment discussed with reference to figure 3, the motor 70 is disposed in the subframe 60. Alternatively it is possible for the motor to be disposed in the main frame 10 and to be connected to the wheel 40 via a coupling which allows the rotational freedom of the wheel 40. This will have the advantage that the wheel frame 60 does not have to be so heavy. On the other hand, however, the coupling between motor and wheel is less direct, entailing losses of power.

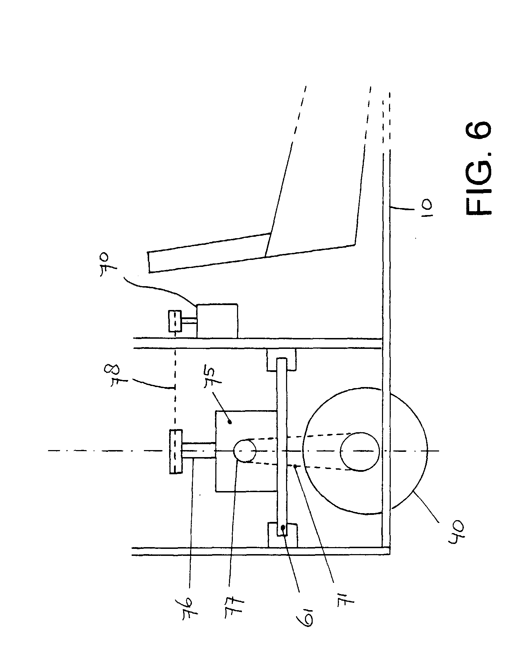

Figure 6 diagrammatically illustrates an example of such a configuration. A transmission unit 75, with a vertically oriented input shaft 76 and a horizontally oriented output shaft 77, is disposed in the subframe 60. By means of a pulley and a belt or chain 71, the output shaft 77 is coupled to the wheel 40, in order to drive the said wheel. The vertical shaft 76 coincides with the axis of rotation 41 of the subframe 60, and, by means of a pulley and a belt or chain 78, is coupled to an output shaft of the motor 70, which is disposed in the main frame 10. The transmission unit 70 thus comprises a right-angled transmission, for example a worm/worm wheel transmission, a right-angled gear wheel transmission, a hydraulic clutch.

A similar structure can be used to drive a plurality of rear wheels 40, 40' (figure 5) by means of a single motor disposed in the main frame 10, as will be clear to a person skilled in the art.

In the example discussed, the speed-control means 80 comprise a wireless communication path 82 between the pedal 81 and the fuel-supply control valve 73. It will be clear that a communication path of this nature does not have to be present if the motor 70 is disposed in the main frame 10. However, even if the motor 70 is disposed in the subframe 60, the coupling between an actuation pedal 81 and a fuel-supply control valve 73 may be effected using purely mechanical means. Mechanical coupling means of this nature then comprise, for example, an actuation cylinder which is mounted in the subframe 60, is disposed coaxially with the axis of rotation 41 of the subframe 60, and can be displaced axially with respect to the subframe 60. This axially displaceable actuation cylinder will then be coupled to the fuel-supply control valve 73, in such a manner that the axial position of the axially displaceable actuation cylinder determines the speed of the motor 70. A movable coupling member is then disposed in the main frame 10 and is coupled, on the one hand, to the said actuation pedal and, on the other hand, to the said actuation cylinder, in order to displace the said actuation cylinder in accordance with the position of the actuation pedal. Even when the subframe 60 rotates with respect to the main frame 10, the said coupling member remains in engagement on the actuation cylinder, in such a manner that the axial position of the actuation cylinder with respect to the subframe 60 does not change as a result of the rotation of the subframe.

If the vehicle according to the invention does in fact have to be suitable for utilization of skis and/or skates, it is desirable for the rear wheel 40 to be provided with a brake. Any desired brake which is known per se may be used for this purpose. To actuate the said brake it is possible, in a similar manner to that described above with reference to the speed control, to use a wireless telecommunication path or purely mechanical means.

In the example discussed, the front wheels 21 and 22 are designed as "twin wheels", i.e. they each comprise two relatively small tyres 24 and 25 which are arranged at a certain distance from one another. If desired, it is also possible for each of the front wheels 21, 22 to be provided with relatively large tyres, for example to have the same tyre size as the rear wheel 40, providing the vehicle with a different appearance.

As has been stated, the rear wheel 40 has a rather rough profile which is useful when driving in, for example, snow or slush. When driving under normal conditions on the road, the said rough profile is not necessary, and unnecessary wear is generated. To avoid this it is possible, of course, to attach a different tyre, but this is a rather laborious operation. The present invention therefore proposes that a rigid rubber ring be arranged so as to clamp around the tyre, which ring then temporarily functions as a running surface. Such a ring could, for example, be approximately 2 cm high and 6 cm wide, but these dimensions are not critical. An additional advantage of a ring of this nature is that it is relatively easy to place around the tyre if the pressure of the tyre is reduced and that it can be clamped securely in place on the tyre by then increasing the pressure of the tyre. The result of the ring is that the tyre maintains its shape better when the pressure is increased.

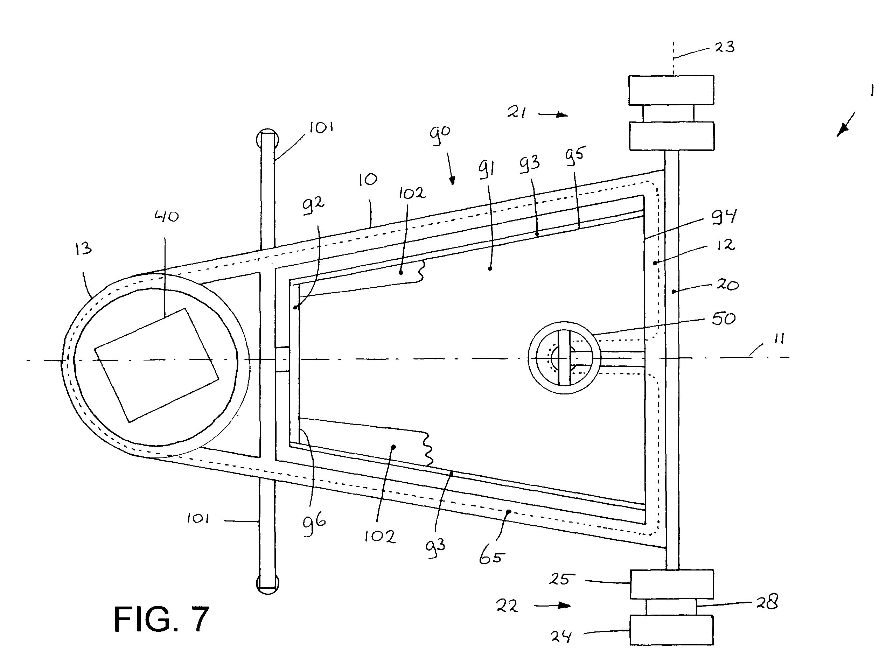

Figure 7 shows a view, which is similar to that of figure 1, of an embodiment of the vehicle according to the present invention, in order to illustrate a few further elaborations. The reference number 101 denotes a support which is releasably attached to the main frame 10, just in front of the rear wheel 40, and which projects laterally with respect to the main frame 10. Wheels, slides or the like may be mounted at the free ends of the supports 101. Such supports 101 could increase the stability of the vehicle in the lateral direction.

If skis or the like are mounted on the wheels 21, 22 of the vehicle, and should the front of the vehicle come off the ground during use, a wheel 21, 22, together with the ski or the like, could start to rotate. To prevent this, the vehicle according to the present invention is preferably provided with means for limiting the freedom of rotation of the wheels 21, 22 when skis or the like are attached thereto. In a simple form, such means may comprises a stop which is mounted on the main frame 10 and with which a ski comes into contact in the event of such a rotational movement. A stop of this nature may be defined by the abovementioned support 101.

It is desirable for a user of the vehicle 1 according to the present invention to have good lateral support in the recessed seat 90. Moreover, it is preferable for the vehicle to be suitable for use for various drivers, who may be of different sizes, and for all possible drivers to be provided with good lateral support of this nature. For this purpose, in a preferred embodiment of the vehicle 1 according to the present invention, and as illustrated in figure 7, inflatable side supports 102 are arranged against the side walls 93 of the recessed seat 90. The said side supports 102 may, for example, be in the form of a cushion or an inner tube. When the user is in the process of sitting down in the recessed seat 90 or of leaving this seat, the said side supports 102 are emptied, so that the driver is not impeded by the side supports 102. When the driver has sat down in the recessed seat 90, the side supports 102 are inflated, so that they hold the driver securely in position.

In the embodiment discussed with reference to figure 1, the front axle 20 is rigidly fixed to the main frame 10. However, the present invention also provides for the possibility of the front axle 20 being pivotably attached to the main frame 10, the pivot axis being situated at the centre of the front axle 20 and being oriented substantially parallel to the longitudinal axis 11 of the vehicle. In this case, a pivot mechanism which is designed to allow the front axle 20 to execute a pivoting movement with respect to the main frame 10 is connected to the front axle 20, which pivoting mechanism is actuated by the steering wheel 50, in such a manner that a wheel which is situated on the inside of a bend is lifted with respect to the other wheel, which is therefore situated on the outside of the bend. In this way, the recessed seat 90 of the vehicle 1 is, as it were, tilted towards the inside of the bend, providing the vehicle according to the present invention with driving characteristics which resemble those of a motor cycle.

## Claims

1. Vehicle (1), comprising:
a main frame (10) with a front (12) and a rear (13); two fixed wheel units (21, 22) which are mounted at the front (12) of the vehicle;
a steering wheel (50) arranged at the front (12) of the vehicle (1);
and at least one driven, steerable wheel (40) which is mounted at the rear (13) of the vehicle;
the driven wheel (40) being mounted in a subframe (60) which is attached to the main frame (10) in such a manner that it can rotate about a vertical axis (41), the rotational freedom of the subframe (60) in relation to the said vertical axis of rotation (41) being at least 360° and preferably unlimited, both to the left and to the right; and a recessed seat (90) being situated between the driven wheel (40) and the two fixed wheel units (21, 22).

2. Vehicle (1), comprising:
a main frame (10) with a front (12) and a rear (13);
two fixed ski units (30) or skate units which are mounted at the front (12) of the vehicle;
a steering wheel (50) arranged at the front (12) of the vehicle (1);
and at least one driven, steerable wheel (40) which is mounted at the rear (13) of the vehicle;
the driven wheel (40) being mounted in a subframe (60) which is attached to the main frame (10) in such a manner that it can rotate about a vertical axis (41), the rotational freedom of the subframe (60) in relation to the said vertical axis of rotation (41) being at least 360° and preferably unlimited, both to the left and to the right;
and a recessed seat (90) being situated between the driven wheel (40) and the two fixed ski units (30) or skate units.

3. Vehicle according to claim 1, provided with ski units (30) or skate units which can be attached to the fixed wheel units (21, 22).

4. Vehicle according to claim 3, wherein the fixed wheel units (21, 22) are designed as "twin wheels", with two wheels (24, 25) per wheel unit (21, 22), the said wheels (24, 25), with an axial distance between them, being attached to a drum (28), and wherein each skate unit or ski unit (30) is provided with attachment members (35) for attaching the relevant skate unit or ski unit (30) to a said drum (28), between the wheels (24, 25).

5. Vehicle according to any preceding claim, wherein the recessed seat (90), in the vicinity of a front side (94) thereof, is pivotably connected to the main frame (10), and wherein the recessed seat (90), in the vicinity of its rear side, is connected to the main frame (10) via a spring or shock absorber (97).

6. Vehicle according to any preceding claim, wherein a rotation of the steering wheel (50) with respect to the main frame (10) is transmitted to the subframe (60) by means of an endless chain (65).

7. Vehicle according to any preceding claim, wherein a motor (70) for driving the steerable wheel (40) is also attached to the subframe (60).

8. Vehicle according to claim 7, provided with speed-control means (80) for controlling the speed of the motor (70), comprising:
a member (81) which can be operated by the driver;
a speed-control member (73) of the motor (70);
and a wireless communication path (82) between the actuating member (81) and the speed-control member (73), which wireless communication path (82) is preferably a radio communication path or an optical communication path.
